# EUROPEAN PATENT APPLICATION

(11) **EP 2 919 173 A1**
(43) Date of publication of application: **16.09.2015**
(21) Application number: 14158868.1
(22) Date of filing: 11.03.2014
(51) Int. Cl.: G06Q 10/00

(54) **A method for providing WEB MES screens with navigation context**

(71) Applicant: Siemens Aktiengesellschaft, 80333 München (DE)
(72) Inventor: Russo, Francesco, 16011 Arenzano (IT); Carlucci, Claudio, 16145 Genova (IT)
(74) Representative: Maier, Daniel Oliver

(57) **Abstract**

It is an object of the present invention to provide a method for providing MES screens to a user thereby eliminating the need that the MES screens have to be customized each time the user logs to the WEB MES portal.

This objective is achieved by a method for providing MES screens to a user logged to a WEB MES Portal, said method comprising the steps of:
a) providing a MES software system enabled to control and managed a production process, said production process being executed by physical resources that deliver continuously or discontinuously data items representing the status of the resource with respect to the production process, such as actual temperature, actual throughput etc.;
b) further enabling the MES software system to provide said WEB MES Portal wherein the WEB MES Portal provides a plurality of pre-defined WEB screens to the logged user wherein the WEB screen comprise pre-defined parts of the data items and page-specific WEB controls;
c) assigning a MES context repository to the WEB MES Portal, said MES context repository comprising navigation context data specific to said user; and
d) at runtime when the user logs to the WEB MES Portal applying the navigation context data to the WEB controls in the MES screens in order to customize the MES screens displayed to the user according to the applied navigation context data.

This method allows to store in the form of the navigation context data the user specific navigation context and allows to use this navigation context data to filter the MES screen to be displayed to this user. When a MES page is opened in the WEB MES Portal, the WEB controls in that page request to the MES context repository whether there is navigation context data available for this user. If this navigation context data is available, the WEB controls will apply the navigation context data thereby providing the WEB screens in the user specific way.

## Description

The present invention relates to a method for providing WEB MES screens to a user being logged to a WEB MES Portal.

In the world of industrial automation of today, in order to increase competitiveness, manufacturing companies need to simultaneously reduce time-to-market, increase process visibility and production flexibility, optimize forecasting and scheduling, and reduce scrap, stock levels and downtimes; all while ensuring optimal quality and production efficiency across all global facilities.

Hence in order to meet these demanding goals, manufacturing companies require an integrated IT infrastructure that helps them in coordinating production on a global scale and, if necessary, in real time. The Manufacturing Execution System (MES) is generally known as the IT layer that integrates the business systems (e.g. ERP) and production control systems. The Siemens Corp. offers a broad range of MES products, under its SIMATIC® product family.

As defined by the Manufacturing Enterprise Solutions Association (MESA International), the MES system "is a dynamic information system that drives effective execution of manufacturing operations", by managing "production operations from point of order release into manufacturing to point of product delivery into finished goods" and by providing "mission critical information about production activities to others across the organization and supply chain via bidirectional communication." The international standard for developing MES systems is commonly referred as ISA-95.

The functions that a MES system usually includes are resource allocation and status, dispatching production orders, data collection/acquisition, quality management, maintenance management, performance analysis, operations/detail scheduling, document control, labor management, process management and product tracking.

Thus, the goal of MES systems developed by software suppliers is to provide manufacturing companies (the customers) with tools for measuring and controlling production activities with the aim of boosting profitability, increasing productivity, improving quality and process performance to manufacturing plants.

As used herein, a software application is a set of software components developed by software developers, at developing time, to perform some useful actions within a MES system, e.g. monitoring values coming from plant process or controlling a plant device. Typically, at engineering or configuration time, system engineers flexibly customize MES applications according to the specific manufacturing plant requirements. Instead, at runtime, MES applications are utilized by end-users who may be plant operators or line responsible personnel.

MES systems are provided with front-end/client GUI applications which may be used by end-users to plan and control manufacturing activities. MES GUI applications play a key role in bringing together process, quality and business information from various sources into one unified real-time view of the production status of the plant. In fact, MES GUI applications display to the end-user graphical screens which enable overview several parameters or scenarios of the plant activities, such as for example the performance of a production line the operator is responsible for. Nowadays, the MES screens are mostly developed in form of web-pages comprising the information that can be filtered or specified by user customization of the specific web page.

For example, with MES application suite SIMATIC IT, it is provided a Client Application Builder (CAB) which is composed of a set of modules allowing users to build customized GUI screen-pages, such as the WEB MES Portal Pages. In the WEB MES Portal, the MES system provides a number of predefined MES screens to a MES user that logs to the WEB MES Portal.

Typically, software suppliers develop a MES software-product as a general purpose solution to meet several and different customer requirements. As a consequence to it, also the collections of MES screens, which are supplied with the MES product, are designed, at page developing time, to be general purpose in order to be used in various different situations.

However, since customers require that MES products be customized for a specific project fitting their specific needs or user rolls, also the GUIs of MES screens (WEB MES Portal Pages) need to be customized in order to satisfy the customer requirements of the specific project. This customer need is a fundamental one since the end-users, at the customer site, interact with the MES product mainly through the GUI of the MES-screens. Hence, some enhancement needs of MES customers have to be fulfilled on the specific single project, so that the effectiveness and the usability of the MES solution are improved.

An enhancement need of MES customers regards the possibility to enable the system engineer to add project specific and/or roll specific contextual information to the MES screen and/or for loading the MES screen. This means that MES Users need to navigate the WEB MES Portal Pages in a "filtered mode", e.g. a MES user works mainly on a particular production line, such as the operator of said production line. Further, the MES user has been assigned a specific and usually pertinent user roll which implies that he works with a persistent user profile, too. It would be therefore desirable that all pages visited by this specific MES user therefore share and use the same MES navigation context (e.g. the context "production line") in order to provide the MES screens already "filtered" (customized) automatically.

Unfortunately, the use of a standard history feature as this is known from commodity web browsers, such as IE, Netscape, Mozilla Firefox, Safari, is useless in this specific MES application since the pages/url visited are only valid for a predefined period of time. In the WEB MES Portal therefore currently does not exist any assistance to provide some "filtering" information when opening MES screens. Each time a page is opended, this page requires to be manually filtered (customized) wherein the only context usually shared are the user profile information, such as its rights, roll etc.

It is therefore an object of the present invention to provide a method for providing MES screens to a user thereby eliminating the need that the MES screens have to be filtered each time the user logs to the WEB MES portal.

This objective is achieved according to the present invention by a method for providing MES screens to a user logged to a WEB MES Portal, said method comprising the steps of:
a) providing a MES software system enabled to control and managed a production process, said production process being executed by physical resources that deliver continuously or discontinuously data items representing the status of the resource with respect to the production process, such as actual temperature, actual throughput etc.;
b) further enabling the MES software system to provide said WEB MES Portal wherein the WEB MES Portal provides a plurality of pre-defined WEB screens to the logged user wherein the WEB screen comprise pre-defined parts of the data items and page-specific WEB controls;
c) assigning a MES context repository to the WEB MES Portal, said MES context repository comprising navigation context data specific to said user; and
d) at runtime when the user logs to the WEB MES Portal applying the navigation context data to the WEB controls in the MES screens in order to customize the MES screens displayed to the user according to the applied navigation context data.

This method allows to store in the form of the navigation context data the user specific navigation context and allows to use this navigation context data to filter the MES screen to be displayed to this user. When a MES page is opened in the WEB MES Portal, the WEB controls in that page request to the MES context repository whether there is navigation context data available for this user. If this navigation context data is available, the WEB controls will apply the navigation context data thereby providing the WEB screens in the user specific way.

During viewing the MES screen, the user might apply himself during the runtime some modification to the WEB controls, i.e. in terms of a selection of various selectable items assigned to said WEB control. In order to keep these modifications for future calls on the MES screen, it is advantageously when each modification of the controls in WEB screen by the user is stored to the navigation context data comprised in the MES screens.

Since in the MES system, the various users have some predetermined tasks and missions that are specifically reflected in the respective user profile of the users, it is further advantageously when the navigation context data is at an engineering phase initially implemented according to a pre-defined profile of the user. With other words, the user already sees a filtered version of the MES screens specific to his user profile when he is logging the first time to the WEB MES Portal to request the MES screens. Simple example for that is the user profile of a manager for a specific production line. The respective navigation context data therefore filters only those MES screen out of the volume of MES screen that are relevant to this specific production line.

The invention will now be described in preferred but not exclusive embodiments with reference to the accompanying drawings, wherein:
- Figure 1: shows schematically the workflow at a WEB MES Portal when a user logs to the WEB MES portal;
- Figure 2: shows schematically the workflow at the WEB MES Portal when the user opens a specific MES screen (MES Portal Page); and
- Figure 3: shows schematically the workflow at the WEB MES Portal when a user changes during the runtime his navigation context.

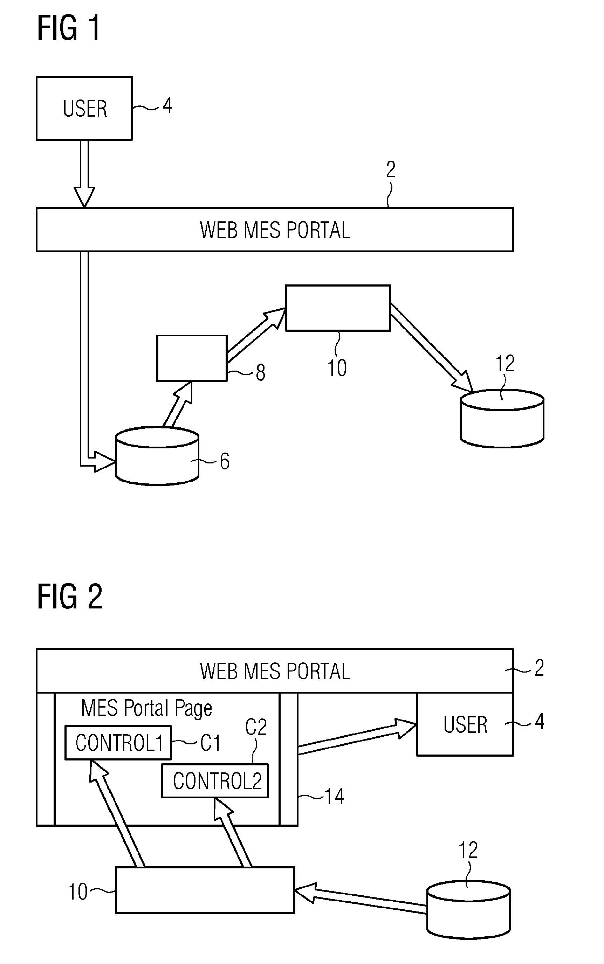

Figure 1 shows schematically the workflow at a WEB MES Portal 2 when a user 4 logs to the WEB MES Portal 2. The WEB MES Portal 2 is a tool comprised within a manufacturing execution system (MES system) which provides pre-defined MES screen to the user 4. The MES screens herein are WEB pages that are displayed at the GUI which the user 4 uses to access the MES system. The details on the MES system have been explained above in the introducing part of this specification. In general, the MES (software) system is enabled to control and managed a production process wherein said production process is executed by physical resources that deliver continuously or discontinuously data items representing the status of the resource with respect to the production process, such as actual temperature, actual throughput, tracking data, etc. In view of the present invention, the MES (software) system further provides said WEB MES Portal 2 wherein the WEB MES Portal 2 provides a plurality of pre-defined WEB screens to the logged user 4 wherein the WEB screen comprise pre-defined parts of the data items and page-specific WEB controls.

When the user 4 logs to the WEB MES Portal 2, some of the user profile properties that are stored in a MES User Profile Properties Repository 6 are accessed by a MES Portal Profile Service 8 which is a software module requesting the user profile properties from the MES User Profile Properties Repository 6. The MES Portal Profile Service 8 is handing over this information to a MES Navigation Context Service 10 which is a software module for acquiring this user profile properties and writing them into a MES navigation context repository 12. The MES navigation context service 10 therefore offers a service for reading/writing data representing the user profile properties, a set of pre-defined controls in the MES screen, such as filter, grid etc., able to the use the MES navigation context service and a MES navigation context history control in order to provide a "Context History" in place of a standard "Page History". Each user 4 can store either by his own initiative or automatically assigned by his specific user profile some user specific information related to the MES navigation context. E.g. the user 4 can store for a property called "Working Line" a pre-defined value, for example the value 1. This means that the user 4 is interested to navigate in WEB MES Portal 2 only to MES screens comprising relevant information (such as production performance data, production tracking data etc.) for the working line 1. Current controls in the MES screens allow then a later configuration on the MES screen with the possibility to perform a "READ ONLY"-binding between some controls (e.g. "CurrentLine Filter") and some of the user profile property information (e.g. WorkingLine). This configuration allow the control to know the name of the context to be retrieved during runtime in order to provide a navigation context already "filtered" according to the user profile properties in the MES navigation context repository. The control, such as the "CurrentLine Filter", uses the user profile property, such as the user profile property "WorkingLine=1", in order to provide exactly in the MES screens the information that is related to this specific equipment (Working Line No. 1).

Figure 2 schematically illustrates the workflow at runtime when the user 4 is logged to the WEB MES Portal 2. Usually, the user 4 requests immediately at least one MES portal page 14 (which is an equivalent term for the term "MES screen"). The controls, here the controls C1 and C2, of the requested MES portal page 14 will then request the MES navigation context service 10 whether an adequate MES navigation context data, for example by deduction of the user profile property, is stored in the MES navigation context repository 12. In case of a presence of such data, the MES navigation context data is transferred from the MES navigation context repository 12 to the MES navigation context service 10 wherein the MES navigation context data is then applied to the WEB controls C1, C2 in the MES screen 14 in order to customize (filter) the MES screens 14 displayed to the user 4 according to the applied MES navigation context data. Again, this procedure performs a "write" binding between the controls C1, C2 (e.g. "WorkingLine list/grid") and the MES navigation context data loaded from the MES navigation context repository 12. Following this procedure, the user 4 is therefore served with the MES screens 14 already individually customized according to the user specific MES navigation context data.

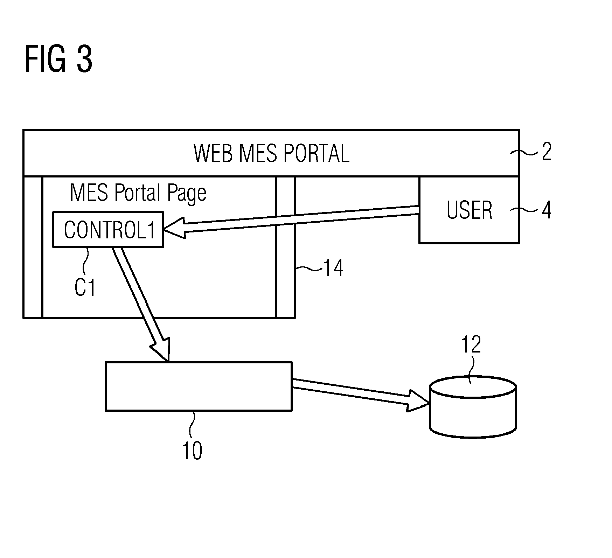

Figure 3 schematically illustrates the workflow at the WEB MES Portal 2 when the user 4 changes his MES navigation context during runtime (shop floor in operation mode). In the present example, the user 4 changes his selection in the control C1 of the MES Portal Page 14 (MES screen). For example, the user 4 might be interested to see in the grid for the KPI's of the production lines not only the results related to the production line 1 (which is personally operated by him in this example) but also related to the production lines 2 and 3. Once the user 4 has made this amendment to the control C1, the amendment will be collected automatically by the MES navigation context service 10 and stored in the MES navigation context repository 12. Therefore, the MES navigation context service 10 collects each context modification in order to provide a "Context History" feature. Using the "Context History" feature, it is possible to read and actualize the current MES navigation context data with a previously selected value (e.g. the list of all production lines selected by the control "WorkingLine List/grid".

The "Context History" feature provide by the above-mentioned procedure has to major use cases in the MES environment:
Use Case 1: Find a visited page/link when the url is not easily accessible from a menu or a search operation; and
Use Case 2: Recreate the same "context/selection" of a previous visit to the page.

While the standard history approach known from ordinary WEB browsers mainly satisfy the use case 1, while the MES navigation context history will provide an alternative solution for the use case 2 and therefore in the WEB MES Portal 2 because of the small number of WEB Portal Pages, the context history is used mainly for use case 2.

A generic use case can be explained in the following: the user 4 has visited five times the "Production Line Management Page" of the WEB MES Portal 2 for five different production lines PL 1 to PL5. Now, the user wants to reopen the "Production Line Management Page" again for the production line PL1 only. With the standard navigation context of an ordinary WEB browser, the user 4 has to make his choice out of five identical links in the standard history without any chance to know in advance which would be the right link that brings him directly to the "Production Line Management Page" related to the production line PL1. At this stage, the normal standard history is useless to him for this approach. Using the MES navigation context history, the user 4 has the choice to actualize one of the five different "Production line management pages" he has visited beforehand. He then opens directly the "Production line management page" he is interested in.

The standard browser "history" provided by known browser is able to "Recreate the same "context/selection" of a previous visit to the page" but the way the standard history allows to distinguish between "context/selection" is not always usable. A simple example can be given when a user has opened 3 times the "login page" with different "context/selection". If the user tries to use the IE history to reopen the login page with a particular "context", the type of support IE is giving to the user is insufficient because the name of the link is always the same "Login". It is therefore necessary to provide additional information (MES navigation context data) on tooltip about the real "url" the user would like to re-open. When the user now browses the WEB MES Portal page, he receives a menu allowing him to browse the MES screens in three different ways. First option, the user opens the MES screen directly with the information present in terms of the actual MES navigation context data stored with respect to this specific user in the MES navigation context repository 12. As a result, the MES screen opens exactly the same way this user has navigated the last time to this page.

Second option, the user can use the normal history stored in the WEB browser but here it can happen that the history information does not provide enough information about the exact context the user is interested in. For example, two urls for the "My Profile" page of the specific user are identical but the user would like to open a distinct one of them.

Third option, the user can specify and amend the MES navigation context data wherein a small menu offering a number of drop-down lists can be user. The drop-down lists can be for example related to select a specific equipment, a specific shift and a specific order (of course, also groups of equipment, shifts and orders can be selected). When opening this small menu, the user directly sees the last selection for his MES navigation context data he has made. Further, when opening a drop-down list, the user also gets a list and can restore all MES navigation context data selections he has previously used. Furthermore, the user can also remove some MES navigation context data from further navigation, for example by un-checking a box related to the specific drop-down list, i.e. the equipment list. As described already above with respect to Figure 3, these amendments are immediately stored to the MES navigation context repository 12 by the MES navigation context service 10. When the user has finished the amendment mode offered by this third option, he is able to switch to the first option using the MES Navigation Context actually defined in the third mode to navigate to the MES screen 14 he is actually interested in. The MES navigation context data is therefore like a filter that filters out of the entirety of the MES screens 14 offered by the WEB MES Portal 2 the MES screen currently customized by the user in terms of the MES navigation context data stored in the MES navigation context repository 12 and handled by the MES navigation context service 10.

## Claims

1. A method for providing MES screens (14) to a user (4) being logged to a WEB MES Portal (2), comprising the steps of:
a) providing a MES software system enabled to control and managed a production process, said production process being executed by physical resources that deliver continuously or discontinuously data items representing the status of the resource with respect to the production process, such as actual temperature, actual throughput etc.;
b) further enabling the MES software system to provide said WEB MES Portal (2) wherein the WEB MES Portal (2) provides a plurality of pre-defined WEB screens (14) to the logged user (4) wherein the WEB screen (14) comprise pre-defined parts of the data items and page-specific WEB controls (C1, C2);
c) assigning a MES context repository (12) to the WEB MES Portal (2), said MES context repository (12) comprising navigation context data specific to said user (4); and
d) at runtime when the user logs to the WEB MES Portal (2) applying the navigation context data to the WEB controls (C1, C2) in the MES screens (14) in order to customize the MES screens (14) displayed to the user (4) according to the applied navigation context data.

2. The method according to claim 1, wherein each modification of the WEB controls (C1, C2) in WEB screen (14) by the user (4) is stored to the navigation context data comprised in the MES screens (14).

3. The method according to claim 1 or 2, wherein the navigation context data is at an engineering phase initially implemented according to a pre-defined profile of the user.
